Europäisches Patentamt

European Patent Office

Office européen des brevets

(11) Numéro de publication: **0 026 754**
**A1**

# (12) DEMANDE DE BREVET EUROPEEN

(21) Numéro de dépôt: **80870041.3**

(22) Date de dépôt: **25.09.80**

(51) Int. Cl.³: **B 65 G 1/06**
**B 65 G 47/10, G 07 F 11/58**

(30) Priorité: 25.09.79 DE 2938757
03.09.80 BE 201966

(43) Date de publication de la demande:
08.04.81 Bulletin 81/14

(84) Etats Contractants Désignés:
AT CH DE FR GB IT LI NL SE

(71) Demandeur: Goossens, Willy
Brusselsesteenweg, 193 Bus 207
B-9002 Ledeberg(BE)

(72) Inventeur: Goossens, Willy
Brusselsesteenweg, 193 Bus 207
B-9002 Ledeberg(BE)

(74) Mandataire: Overath, Philippe et al,
Cabinet Bede 13, Avenue Antoine Depage
B-1050 Bruxelles(BE)

(54) Installation de stockage permettant la sélection et le prélèvement automatique d'articles.

(57) Chaque élément porteur (5) de l'installation est muni d'un dispositif de transport des articles (16-18) et d'un organe de commande individuel et autonome (6) pour la mise en action de ce dispositif de transport (16-18).

L'installation comporte des dispositifs (23,24) pour faire varier l'inclinaison des plans inclinés (7).

Les articles ainsi prélevés peuvent être groupés et déplacés par un moyen de transport commun (8) vers un poste central d'emballage et de distribution.

./...

EP 0 026 754 A1

Croydon Printing Company Ltd.

FIG. 1

FIG. 4

La présente invention se rapporte aux installations de stockage permettant la sélection et le prélèvement automatique d'articles comme par exemple des produits pharmaceutiques.

Ces articles sont entreposés dans des rayonnages composés de plusieurs unités pouvant être groupées et assemblées selon les besoins.

Ces rayonnages sont munis de plateaux ou autres éléments de support qui sont disposés à des niveaux différents et divisés sur leur longueur par une série d'éléments porteurs de largeur différente dans lesquels peuvent glisser les articles entreposés.

Il existe des installations dans lesquelles chaque élément porteur est muni d'un dispositif permettant l'avancement des articles comme par exemple décrit dans la demande allemande publiée après examen DE-AS 1449152.

Ce dispositif consiste en un organe poussoir pouvant se déplacer le long de l'élément porteur lorsqu'il est actionné par un mécanisme de commande. Ce mécanisme de commande se déplace horizontalement et verticalement le long du côté avant du rayonnage afin d'effectuer le prélèvement d'un article à la fois.

Dans une installation de stockage où un grand nombre d'articles différents est à prélever, il est évident qu'un dispositif tel que décrit dans la demande mentionnée ci-dessus, ne répond plus aux exigences étant donné le temps nécessaire pour le positionnement du dispositif de commande et l'actionnement de chaque élément porteur du produit sélectionné.

En plus, ces installations doivent avoir une structure rigide et encombrante surtour pour la partie comprenant le dispositif de commande et d'enlèvement des articles qui se trouvent du même côté avant du rayonnage.

L'approvisionnement d'articles dans une telle installation est également très difficile et nécessite l'arrêt de l'installation pour effectuer le recul de l'organe poussoir à l'aide d'un appareil spécial.

La présente invention a pour but de remédier à tous ces inconvénients.

A cet effet, l'installation de stockage suivant l'invention, comprend un ensemble de rayonnages dans lequel chaque élément porteur comporte un organe de commande individuel et autonome pour la mise en action du dispositif de transport des articles à prélever.

Cet organe de commande individuel peut être par exemple un vérin hydraulique ou pneumatique muni d'un mécanisme d'avance ou encore un moteur électrique. Le transport des articles est réalisé de préférence à l'aide d'une bande de transport se déplaçant le long de l'élément porteur. Les éléments porteurs sont réalisés à partir de profilés permettant un assemblage modulaire pouvant être adapté aux dimensions des articles à entreposer. Une succession de plans inclinés fixes ou amovibles peut être prévue afin d'amortir la chute des articles ainsi prélevés.

Les différents organes de commande sont reliés d'une manière connue en soi à une centrale de commande telle qu'un ordinateur.

L'installation de stockage suivant l'invention sera décrite plus en détails ci-après en se référant aux dessins représentant des exemples de réalisation,:

La figure 1 est une vue en coupe transversale d'un ensemble de rayonnages muni du dispositif objet de l'invention;

La figure 2 est une vue en coupe transversale de deux éléments porteurs juxtaposés;

La figure 3 est une vue en coupe transversale d'un ensemble modulaire d'éléments porteurs;

La figure 4 est une vue en coupe longitudinale d'un élément porteur;

Le rayonnage 1 comporte des montants ou parois 2 ainsi que des tablettes ou longerons 3 disposés à des niveaux différents appropriés à hauteur des articles 4.

Les articles 4 sont entreposés sur des éléments porteurs 5 montés les uns à côté des autres sur les longerons 3.

Comme il sera décrit plus en détail ci-après chaque élément porteur 5 est pourvu d'un dispositif de transport constitué par une bande maintenue sous tension constante par des rouleaux montés aux extrémités de chaque élément porteur 5.

Conformément à l'invention, le dispositif de transport de chaque élément porteur 5 peut être actionné par un organe de commande individuel et autonome 6.

Comme on peut s'en rendre compte, différents éléments porteurs 5 peuvent être actionnés simultanément par leurs propres organes de commande 6. Chaque élément porteur 5 est avantageusement muni de moyens d'accrochage 9 sur les tablettes ou longerons 3.

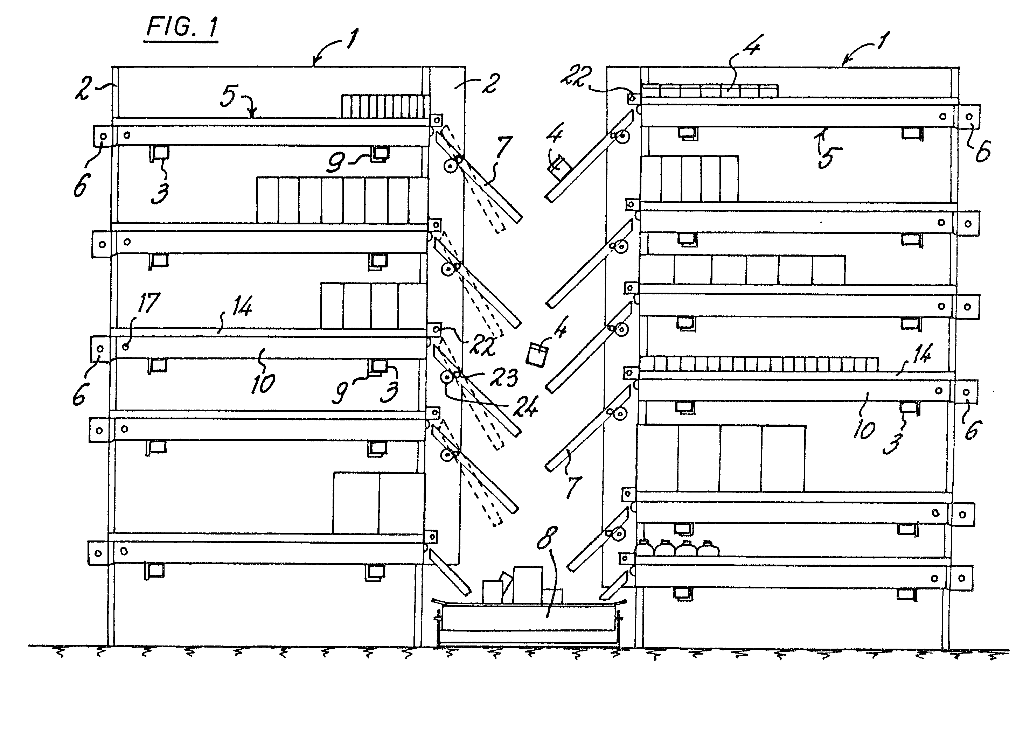

De préférence on prévoit que les faces frontales d'une paire de rayonnages 1 sont dirigées l'une vers l'autre (figure 1) en sorte que la chute des articles 4 entreposés sur les éléments porteurs supérieurs est chaque fois amortie par les

4                                    0026754

plans inclinés 7 successifs des éléments porteurs inférieurs du même rayonnage et du rayonnage d'en face. Les articles 4 aboutissent alors sur une bande de transport commune 8 disposée entre deux rayonnages se faisant face et située à un niveau inférieur au niveau des éléments porteurs les plus bas.

La bande de transport commune 8 achemine les articles prélevés vers un poste d'emballage et de distribution.

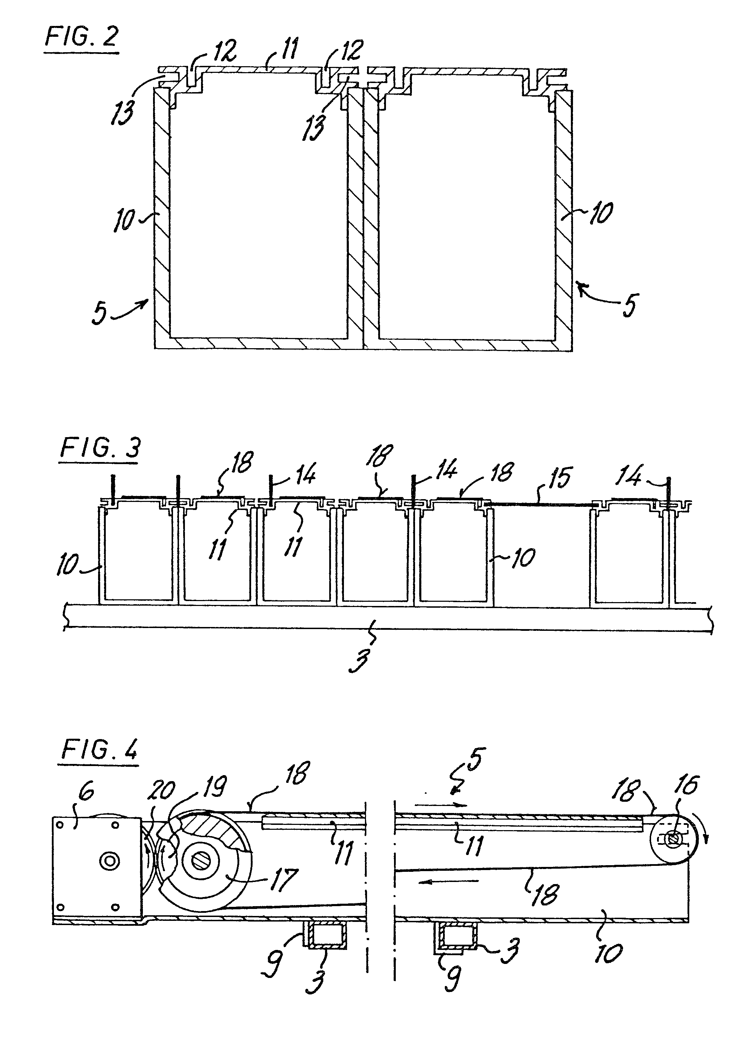

Les figures 2 et 4 montrent plus en détail la construction d'un élément porteur 5.

Chaque élément porteur 5 est constitué d'un corps 10 en forme de U, dont l'ouverture est fermée par un couvercle profilé 11.

Ce couvercle 11 est pourvu de rainures longitudinales verticales 12 et horizontales 13, de façon à pouvoir réaliser un assemblage modulaire par juxtaposition (figure 3) permettant d'obtenir des chemins de transport d'articles ayant des largeurs différentes et adaptées à chaque article. Dans les rainures verticales 12 on peut disposer des parois de guidage latérales 14, délimitant la largeur des chemins et dans les rainures horizontales 13, des entretoises 15 ou parois de fermeture pour article de grandes dimensions.

Entre les parois latérales du corps 10 sont logés les axes du rouleau tendeur 16 et du rouleau entraîneur 17 d'une bande de transport 18.

Une couronne dentée 19 du rouleau entraîneur 17 est en prise directe avec une couronne dentée 20 d'un organe de commande individuel , tel qu'un ensemble moteur électrique - boîte réducteur de vitesse 6.

Sur le côté avant, la bande 18 passe par le rouleau tendeur 16 de faible diamètre monté de manière connue dans une fourche 21 soumise à l'action constante de ressorts de pression et de vis de réglages (non représentés).

Les articles sont disposés les uns derrière les autres sur chaque élément porteur 5. Lorsque l'organe de commande est actionné, la bande de transport 18 se met en mouvement et le premier article disposé près du rouleau tendeur 16 bascule et tombe sur le plan incliné 7 correspondant. Lors de son basculement, larticle 4 sélectionné interrompt un signal lumineux d'une cellule photoélectrique 22 prévue à cet effet à proximité du rouleau tendeur 16, permettant ainsi de compter le nombre d'articles prélevés et d'arrêter l'avancement de la bande 18. Le nombre d'articles prélevés peut ainsi être enregistré pour chaque élément porteur et l'état du stock en magasin peut être obtenu à tout moment en interrogeant les données en mémoire d'un ordinateur gérant l'ensemble.

Dans le cas d'articles de grande dimensions, ceux-ci peuvent être supportés par deux éléments porteurs ayant chacun son moteur d'entraînement 6 et sa bande de transport 18. Les axes des rouleaux entraîneurs 17 seront toutefois reliés entre eux afin d'obtenir un avancement régulier des deux bandes 18. Les deux éléments porteurs seront reliés par une entretoise horizontale 15 de dimension appropriée, comme illustré à la figure 3.

Comme montré également sur la figure 1 les articles qui tombent ne peuvent pas rester calés entre deux plans inclinés opposés.

En effet, aussitôt qu'un article 4 a quitté un des éléments porteurs 5 et est donc passé devant une des cellules photoélectriques 22, l'inclinaison des plans inclinés 7 change. A cet effet, chaque plan incliné 7 est monté de manière à pouvoir basculer entre une paire de montants ou parois 2, autour d'un axe 23, pour prendre une position représentée en traits interrompus sur la figure 1. Ce basculement se fait à l'intervention d'un moteur 24, prévu de préférence individuellement pour chaque plan incliné. Ensuite, chaque plan incliné 7 revient à sa position initiale représentée en traits pleins. Le système est programmé de manière telle que le passage du dernier article d'une série constituant une commande complète devant une cellule photoélectrique 22 met en branle tous les plans inclinés 7, successivement en commençant toujours par le plan incliné supérieur pour terminer par le plus bas. Aussi longtemps que tous les plans inclinés ne sont pas revenus à leur position initiale, aucun autre article 8 appartenant à une autre commande ne peut être amené à passer devant une des cellules photo-électriques 22.

Les avantages de la présente invention sont :

- rapidité de prélèvement d'un grand nombre d'articles différents ;

- facilité d'approvisionnement des éléments porteurs par l'arrière de façon continue sans arrêter l'installation ;

- pour les articles de grande consommation on peut prévoir deux ou plus d'éléments porteurs alignés les uns derrière les autres afin d'augmenter l'autonomie de l'installation ;

- lors de l'entretien d'un élément porteur, il peut être enlevé du rayonnage et éventuellement remplacé sans arrêter le fonctionnement de l'installation ;

- grande souplesse d'adaptation des éléments porteurs à la nature et aux dimensions des articles ;

- le stock des articles en magasin est mis à jour continuellement et peut être consulté à n'importe quel moment en interrogeant la mémoire de l'ordinateur gérant l'ensemble.

L'installation décrite ci-dessus est un exemple de réalisation suivant l'invention, mais il va de soi que des variantes sont toujours possible sans sortir du cadre de l'invention. Ainsi on peut par exemple réaliser une installation suivant la figure 1 sans les plans inclinés 7, mais avec un transporteur à bande centrale 8 amovible en hauteur, de manière à venir recueillir les articles aux différents niveaux et de les délivrer au moment où le transporteur est revenu dans sa position la plus basse.

Une installation équivalente peut être réalisée comme magasin public automatique pour articles de grande consommation en prévoyant un plan horizontal ou tablette qui se déplace verticalement pour recueillir les articles sélectionnés aux différents niveaux. Lorsque ce plan horizontal ou tablette revient à son niveau le plus bas, l'utilisateur peut en ouvrant une porte avoir accès aux articles prélevés. Par le mouvement d'ouverture de la porte d'accès, une paroi intérieure peut se mettre en place pour éviter l'accès aux articles non sélectionnés.

Dans le même ordre d'idées on peut également prévoir une réalisation avec les articles partant vers l'arrière (moteur à l'avant), tombant sur un transporteur inférieur ou plan incliné qui ramène les articles sélectionnés vers l'avant du magasin avec accès libre pour le client.

8                                    **0026754**

<u>REVENDICATIONS</u>.

1) Installation de stockage permettant la sélection et le prélèvement automatique d'articles entreposés à des niveaux différents sur des éléments porteurs d'un ou plusieurs rayonnages, chaque élément porteur étant muni d'un dispositif de transport des articles et les articles ainsi prélevés étant groupés et déplacés par un moyen de transport commun vers un poste central d'emballage et de distribution, caractérisée en ce que chaque élément porteur (5) comporte un organe de commande individuel et autonome (6) pour la mise en action du dispositif de transport des articles à prélever.

2) Installation de stockage suivant la revendication 1, caractérisée en ce que l'organe de commande individuel et autonome (6) est constitué par un moteur électrique.

3) Installation de stockage suivant le revendication 1, caractérisée en ce que l'organe de commande individuel et autonome (6) est constitué par un vérin pneumatique ou hydraulique.

4) Installation de stockage suivant la revendication 1 caractérisée en ce que chaque élément porteur (5) est constitué d'un corps (10) substantiellement en forme de U fermé par un couvercle ou plaque profilé (11) pourvu de rainures longitudinales dans le plan vertical (12) et dans le plan horizontal (13) de façon à pouvoir réaliser un assemblage modulaire des chemins de transport aux dimensions des articles.

5) Installation de stockage selon les revendications 1 à 4. dans laquelle le déplacement des articles (4) sur les éléments porteurs (5) est réalisé à l'aide d'au moins une bande (18) ou courroie de transport caractérisée en ce que la bande de transport (18) est maintenue et tendue de part et d'autre de l'élément porteur (5) par au moins deux rouleaux, un rouleau tendeur (16) et un rouleau entraîneur (17) de forme légèrement concave et en ce que la partie supérieure de la bande (18) est supportée par la plaque (11).

6) Installation de stockage selon les revendications 4 et 5, caractérisée en ce que dans les rainures verticales (12) des plaques (11) on peut disposer des parois de guidage latérales (14) et dans les rainures horizontales (13) on peut disposer des entretoises (15) aux parois de fermeture, pour les articles de grandes dimensions.

7) Installation de stockage selon les revendications 4 à 6, caractérisée en ce que le rouleau tendeur (16) de chaque élément porteur (5) est supporté par un axe logé dans des fourches (21) prévues dans les parois latérales du corps (10) et en ce qu'il est soumis à l'action de ressorts de pression et de vis de réglage permettant d'obtenir une tension constante de la bande (18)

8) Installation de stockage selon la revendication 1, caractérisée en ce que chaque élément porteur est monté sur une tablette ou sur des longerons (3) par des moyens d'accrochage (9) permettant la fixation rapide de l'élément porteur (5).

9) Installation de stockage selon la revendication 3, caractérisée en ce que le prélèvement de chaque article (8) entreposé sur un élément porteur (10, 20) est contrôlé par un ou plusieurs éléments photo-électriques ou autres éléments de rupture du courant disposés sur le parcours de chute ou

0026754

de basculement de l'article sur le plan incliné (13).

10) Installation de stockage selon l'une quelconque des revendications 1 à 9, caractérisée en ce que les tablettes ou longerons (3) supportant une série d'éléments porteurs (5) sont prolongés du côté de déchargement par des plans inclinés (7) destinés à coopérer avec une succession d'autres plans inclinés pour amortir la chute des articles (4) provenant des éléments porteurs (5) supérieurs.

11) Installation de stockage selon l'une quelconque des revendications 1-10, caractérisée en ce qu'elle comporte un dispositif (23-24) pour faire varier l'inclinaison des plans inclinés ( 7) en temps opportun.

12) Installation de stockage selon la revendication 11, caractérisée en ce que le dispositif variateur d'inclinaison agit aussitôt après qu'un article quelconque a quitté un des éléments porteurs (5) et est passé devant une des cellules photo-électriques (22).

13) Installation de stockage selon l'une quelconque des revendications 11 et 12, caractérisée en ce que le dispositif variateur d'inclinaison des plans inclinés (7) est monté entre deux montants ou parois (2) en pouvant basculer autour d'un axe (23), un dispositif approprié étant prévu pour commander ce basculement.

14) Installation de stockage selon la revendication 13, caractérisée en ce qu'elle comporte un moteur (24) approprié pour faire basculer les plans inclinés (7).

15) Installation de stockage selon la revendication 13, caractérisée en ce qu'elle comporte un moteur (24) individuel pour faire basculer chaque plan incliné (7).

16) Installation de stockage selon les revendications 13-15, caractérisée en ce que le passage du dernier article d'une série, constituant une commande complète, devant une cellule photoélectrique (22) donne l'instruction aux moteurs (24) des plans inclinés (7) successifs, de modifier leur inclinaison de manière à faire passer des articles éventuellement coincés entre deux plans opposés, en commençant toujours par les plans inclinés supérieurs pour terminer par les plus bas, aucun autre article appartenant à une autre commande ne pouvant être amené à passer devant une cellule photoélectrique (22) aussi longtemps que tous les plans inclinés ainsi mis en branle ne sont pas revenus à leur position initiale

FIG.1

**FIG. 2**

**FIG. 3**

**FIG. 4**

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | US - A - 3 759 417 (ARMSTRONG et al.)<br>* document complet * | 1,2,<br>4,5 |
| | -- | |
| | CH - A - 282 314 (PUNCH ENGINEERING PTY. LTD.)<br>* page 1, ligne 41 à page 3, ligne 28 * | 1 |
| | -- | |
| | US - A - 3 881 633 (BRADT)<br>* colonne 1, ligne 3 à colonne 3, ligne 33 * | 1 |
| | -- | |
| | US - A - 2 672 289 (SKILLMAN)<br>* colonne 4, lignes 12 à 73 * | 1 |
| | -- | |
| | US - A - 2 627 941 (SKILLMAN)<br>* colonne 3, lignes 29 à 48 * | 1 |
| | -- | |
| | DE - C - 242 820 (RHEINISCHE DAMPFKES-SEL- UND MASCHINENFABRIK BÜTTNER)<br>* page 1, lignes 22 à 69 * | 7 |
| | -- | |
| D | DE - B - 1 449 152 (ACKER) | |
| | -- | |
| A | DE - B - 1 200 041 (F. FLORSTEDT KG.) | |
| | -- | |
| A | DE - A - 2 313 808 (FROMME FÖRDER-& LAGERTECHNIK GMBH)<br>--    ./.. | |

**CLASSEMENT DE LA DEMANDE (Int. Cl.3)**

B 65 G    1/06
B 65 G   47/10
G 07 F   11/58

**DOMAINES TECHNIQUES RECHERCHES (Int. Cl.3)**

B 65 G    1/00
B 65 G   21/00
B 65 G   23/00
B 65 G   47/00
G 07 F   11/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 29-12-1980 | SIMON |

OEB Form 1503.1   06.78

**0026754**

Numéro de la demande

**RAPPORT DE RECHERCHE EUROPEENNE**

EP 80 87 0041.3
- page 2 -

Office européen
des brevets

| | DOCUMENTS CONSIDERES COMME PERTINENTS | | CLASSEMENT DE LA DEMANDE (Int. Cl.3) |
|---|---|---|---|
| Catégorie | Citation du document avec indication, en cas de besoin, des parties pertinentes | Revendication concernée | |
| A | FR - A - 2 132 111 (JEPSEN) | | |
| | -- | | |
| A | FR - A - 1 510 457 (F.I.M.) | | |
| | -- | | |
| A | US - A - 3 605 994 (PARLETTE) | | |
| | ---- | | DOMAINES TECHNIQUES RECHERCHES (Int. Cl.3) |